# EUROPEAN PATENT APPLICATION

(11) **EP 4 759 868 A1**
(43) Date of publication of application: **17.06.2026**
(21) Application number: 25222170.0
(22) Date of filing: 10.12.2025
(51) Int. Cl.: C08J 7/04, C08J 7/046, B32B 27/08

(54) **METHOD FOR PRODUCING A MULTILAYER MATERIAL, MULTILAYER MATERIAL AND TRIM PANEL FORMED BY MULTILAYER MATERIAL**

(30) Priority: 11.12.2024 IT 202400028173
(71) Applicant: FERRARI S.p.A., 41100 Modena (IT)
(72) Inventor: MARINELLI, Sissi, 41100 MODENA (IT); BASSO, Adriano, 41100 MODENA (IT); CAPUANO, Silvia, 41100 MODENA (IT); DOLFINI, Riccardo, 41100 MODENA (IT); MANZONI, Flavio, 41100 MODENA (IT); SILVA, Mauro, 41100 MODENA (IT)
(74) Representative: Studio Torta S.p.A.

(57) **Abstract**

The invention relates to a method for producing a multilayer material comprising: 1) a moulding step comprising: mixing a dye and/or a pigment with a transparent thermoplastic or thermosetting resin; moulding the pigmented resin mixture, thereby obtaining a layer with an internal side and an external side; 2) a step of coating the internal side of the layer comprising: applying a first internal layer of a pigmented resin; applying a second internal layer comprising a transparent non-ceramic material; 3) a step of coating the external side of the layer comprising: applying a first external layer comprising a colourless resin; applying a second external layer comprising a transparent ceramic material.

## Description

### Cross-Reference to Related Applications

This patent application claims priority from Italian patent application no. 102024000028173 filed on December 11, 2024, the entire disclosure of which is incorporated herein by reference.

### Technical Field of the Invention

The present invention relates to a method for producing a multilayer material for trim panels of means of transport, in particular of motor vehicles, to a multilayer material and to a trim panel formed by said multilayer material. The multilayer material has an aesthetic appearance very similar to glass.

### State of the Art

The windows of means of transport, in particular of motor vehicles, are made - as is known - of glass. The trim parts surrounding the windows are generally formed, for reasons of manufacture, feasibility, costs and weight, by panels made of thermoplastic materials. The appearance of the windows and that of the trim parts are therefore different and the juxtaposition is often aesthetically unsatisfactory when a seamless look is sought. To date, for producing trim panels, methods of moulding non-pigmented thermoplastic materials with a subsequent step of coating the external, aesthetic side are known. For other applications, for example to produce the dark lenses of sunglasses, methods of moulding pigmented thermoplastic materials are also known. The thermoplastic materials obtained by the known methods have an appearance that is very different from glass, for which reason - when plastic and glass parts are placed side-by-side, there is no aesthetic continuity.

The object of the present invention is to provide a method for producing a multilayer material, in particular for trim panels, which has an appearance similar to glass, in particular the glass of the windows of a motor vehicle.

This object is obtained by the present invention in that it relates to a method for producing a multilayer material as defined in claim 1.

Further objects of the present invention are to provide a multilayer material based on a thermoplastic or thermosetting resin as defined in claim 12 and a trim panel as defined in claim 14.

### Brief Description of the Drawings

For a better understanding of the present invention, an embodiment is illustrated, by way of non-limiting example only, with reference to the accompanying drawings, wherein:
- Figure 1 is a perspective view of a motor vehicle 1, wherein the rear window 2 is made of glass and the trim panel 3 is formed by a multilayer material according to an embodiment of the present invention; and
- Figure 2 is a top view of the motor vehicle shown in Figure 1.

### Detailed Description of the Invention

The method for producing a multilayer material according to the present invention comprises a step of moulding a transparent thermoplastic or thermosetting resin mixed with a pigment and/or dye followed by a step of coating the internal side of the obtained resin layer and a step of coating the external side thereof.

The multilayer material is in particular suitable for forming trim panels.

The moulding step comprises:
- mixing a pigment and/or dye with a transparent thermoplastic or thermosetting resin, obtaining a pigmented resin mixture; and
- moulding the pigmented resin mixture obtained according to standard conditions for the resin to obtain a pigmented resin layer with an internal side and an external side.

When the resin is thermoplastic, it is preferably a polymer or a copolymer selected from the group consisting of polycarbonate, polyacrylate, polyarylate, polyester, polyethylene, polybutylene terephthalate, polysulfone, acrylonitrile butadiene styrene and mixtures thereof. More preferably, the transparent thermoplastic resin is polycarbonate. The transparent thermoplastic resin is preferably in the form of granules, so that it can be mixed with the pigment and/or dye which, for the same reason, is preferably in powder form.

When the resin is thermosetting it is preferably transparent polyurethane.

The pigment and/or dye is preferably green, more preferably it is malachite green or chromium(III) oxide.

The amount by weight of pigment and/or dye with respect to the weight of the transparent thermoplastic resin is preferably from 1 · 10⁻⁴ to 1 · 10⁻² %, more preferably from 10 · 10⁻⁴ to 20 · 10⁻⁴ %, even more preferably about 15 · 10⁻⁴ % by weight of pigment and/or dye with respect to the weight of the transparent thermoplastic resin.

The coating step of the internal side of the pigmented resin layer comprises:
- applying a first internal layer comprising a resin selected from the group consisting of acrylics, polyesters, epoxides and mixtures thereof, pigmented with a black dye; and
- applying a second internal layer comprising a non-ceramic transparent coating material.

As known to the person skilled in the art, the resin pigmented with black dye is mixed with a catalyst and a diluent in appropriate proportions and of the appropriate type according to the selected resin.

The coating step of the external side of the pigmented resin layer comprises:
- applying a first external layer comprising a colourless resin selected from the group consisting of acrylics, polyesters, epoxides and mixtures thereof, to adhere a second external layer on said first external layer; and
- applying a second external layer comprising a transparent ceramic material to resist scratches and abrasions.

The transparent ceramic material of the second external layer is preferably selected from the group consisting of aluminium oxide, barium fluoride, boron nitride, hafnium oxide, lanthanum fluoride, magnesium fluoride, magnesium oxide, scandium oxide, silicon monoxide, silicon dioxide, silicon nitride, silicon oxy-nitride, silicon oxy-carbide, hydrogenated silicon oxy-carbide, silicon carbide, tantalum oxide, titanium oxide, tin oxide, indium tin oxide, yttrium oxide, zinc oxide, zinc selenide, zinc sulphide, zirconium oxide, zirconium titanate or mixtures thereof.

Preferably, the step of applying the first internal layer and/or the step of applying the first external layer is/are performed with a pressure airbrush.

Further, in preferred embodiments, the step of applying the first internal layer and/or the step of applying the first external layer is/are repeated more than once.

The step of applying the first internal layer and/or the step of applying the first external layer is/are preferably followed by a pre-drying step at a temperature from 22°C to 32°C for a time from 15 to 25 minutes. In a preferred embodiment, the pre-drying step occurs at a temperature of 25°C for a time of 18 minutes. In an alternative embodiment, the pre-drying step occurs at a temperature of 30°C for a time of 18 minutes.

The step of applying the second internal layer and/or the step of applying the second external layer is/are preferably followed by a pre-drying step at a temperature from 22°C to 32°C for a time from 15 to 25 minutes. In a preferred embodiment, the pre-drying step occurs at a temperature of 25°C for a time of 20 minutes. In an alternative embodiment, the pre-drying step occurs at a temperature of 30°C for a time of 20 minutes.

The pre-drying step following the application of the second internal layer and/or the second external layer is preferably followed by a drying step at a temperature from 70 to 90°C for a time from 40 to 50 minutes, more preferably at a temperature of about 80°C for a time of 45 minutes.

The method preferably also comprises masking steps of one of the two sides when the other side is being coated. In particular, the method preferably comprises:
- a step of masking with a masking material the external side of the layer of pigmented resin prior to the step of coating the internal side of the layer of pigmented resin; and
- a step of removing the masking material following the step of coating the internal side of the layer of pigmented resin; and/or
- a step of masking with a masking material the internal side of the layer of pigmented resin prior to the step of coating the external side of the layer of pigmented resin; and
- a step of removing the masking material following the step of coating the external side of the layer of pigmented resin.

The multilayer material according to the present invention comprises a layer of moulded pigmented thermoplastic or thermosetting resin having an internal side and an external side, the internal side being coated with at least a first internal layer comprising a resin selected from the group consisting of acrylics, polyesters, epoxides and mixtures thereof, pigmented with a black dye, and a second internal layer comprising a transparent non-ceramic coating material, and the external side being coated with at least a first external layer comprising a colourless resin selected from the group consisting of acrylics, polyesters, epoxides and mixtures thereof, and a second external layer comprising a transparent ceramic material to resist scratches and abrasions.

In the multilayer material, when in a dry state,
- the first internal layer has a thickness from 18 to 27 µm, preferably from 20 to 25 µm, and the second internal layer has a thickness from 28 to 37 µm, preferably from 30 to 35 µm; and/or
- the first external layer has a thickness from 13 to 27 µm, preferably from 15 to 25 µm, and the second external layer has a thickness from 33 to 47 µm, preferably from 35 to 45 µm.

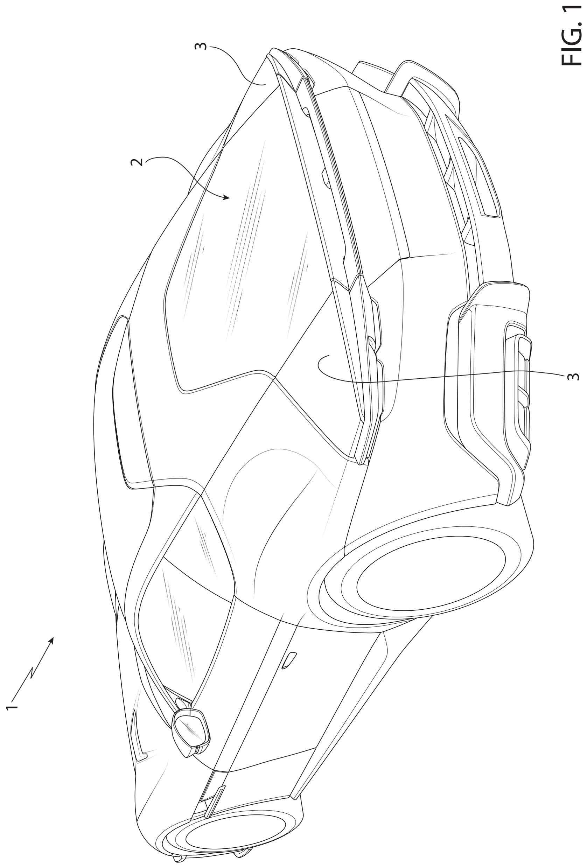

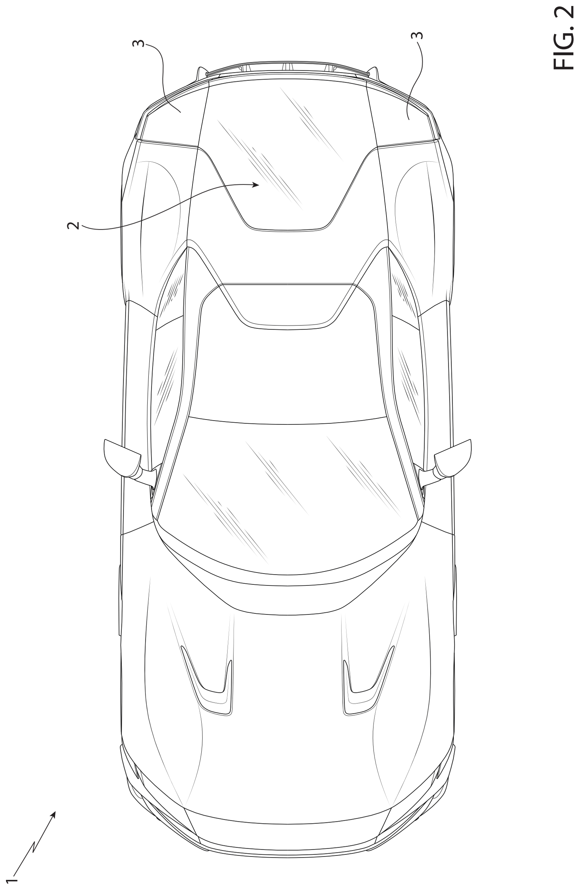

The multilayer material according to the invention may be used to form trim panels. In Figures 1 and 2, a motor vehicle 1 is shown, wherein the rear window 2 is made of glass and the trim panel 3 is formed by a multilayer material according to a preferred embodiment of the present invention. The use of the multilayer material according to the invention for the trim panel 3 ensures that there is no visual break between the rear window 2 and the trim panel 3. On the contrary, there is an aesthetic continuity between the two parts, which is particularly desirable in motor vehicles, in particular luxury ones.

### Advantages

The coating step of the internal side imparts a visual depth effect to the material, just like glass.

The coating step of the external side imparts an even better aesthetic appearance and guarantees the features of resistance to scratches and abrasions necessary for the exterior of a vehicle.

The combination of the coating steps with the moulding step of the pigmented resin provides a synergistic effect that gives the multilayer material an excellent aesthetic and an ideal "matching" (juxtaposition) with glass materials.

Finally, it is clear that modifications and variants to the method and material described herein may be made without departing from the scope of protection of the present invention, as defined in the appended claims.

## Claims

1. A method for producing a multilayer material, in particular for trim panels, comprising:
- a moulding step comprising:
- mixing a pigment and/or dye with a thermoplastic or thermosetting resin, thus obtaining a mixture of pigmented resin;
- moulding the mixture of pigmented resin obtained under standard conditions for the resin so as to obtain a layer of pigmented resin with an internal side and an external side;
- a coating step of the internal side of the pigmented resin comprising:
- applying a first internal layer comprising a resin selected from the group consisting of acrylics, polyesters, epoxides and mixtures thereof pigmented with a black dye;
- applying a second internal layer comprising a non-ceramic transparent coating material;
- a coating step of the external layer of the pigmented resin comprising:
- applying a first external layer comprising a colourless resin selected from the group consisting of acrylics, polyesters, epoxides and mixtures thereof, to adhere a second external layer on said first external layer;
- applying a second external layer comprising a transparent ceramic material to resist scratches and abrasions.

2. The method according to claim 1, wherein the transparent thermoplastic resin is a polymer or copolymer selected from the group consisting of polycarbonate, polyacrylate, polyarylate, polyester, polyethylene, polybutylene terephthalate, polysulfone, acrylonitrile butadiene styrene and mixtures thereof.

3. The method according to claim 2, wherein the transparent thermoplastic resin is polycarbonate.

4. The method according to any of claims 1 to 3, wherein the transparent ceramic material of the second external layer is selected from the group consisting of aluminium oxide, barium fluoride, boron nitride, hafnium oxide, lanthanum fluoride, magnesium fluoride, magnesium oxide, scandium oxide, silicon monoxide, silicon dioxide, silicon nitride, silicon oxy-nitride, silicon oxy-carbide, hydrogenated silicon oxy-carbide, silicon carbide, tantalum oxide, titanium oxide, tin oxide, indium tin oxide, yttrium oxide, zinc oxide, zinc selenide, zinc sulphide, zirconium oxide, zirconium titanate, or a mixture thereof.

5. The method according to any of claims 1 to 4, wherein the method further comprises:
- a step of masking with a masking material the external side of the layer of pigmented resin prior to the step of coating the internal side of the layer of pigmented resin;
- a step of removing the masking material following the step of coating the internal side of the layer of pigmented resin;
- a step of masking with a masking material the internal side of the layer of pigmented resin prior to the step of coating the external side of the layer of pigmented resin; and
- a step of removing the masking material following the step of coating the external side of the layer of pigmented resin.

6. The method according to any of claims 1 to 5, wherein the step of applying the first internal layer and/or the step of applying the first external layer is/are performed with a pressure airbrush.

7. The method according to any of claims 1 to 6, wherein the step of applying the first internal layer and/or the step of applying the first external layer is/are performed from once to twice.

8. The method according to any of claims 1 to 7, wherein the step of applying the first internal layer and/or the step of applying the first external layer is/are followed by a step of pre-drying at a temperature from 22°C to 32 °C for a time from 15 to 25 minutes.

9. The method according to any of claims 1 to 8, wherein the step of applying the second internal layer and/or the step of applying the second external layer is followed by a step of pre-drying at a temperature from 22°C to 32 °C for a time from 15 to 25 minutes.

10. The method according to claim 9, wherein the step of pre-drying is followed by a step of drying at a temperature from 70 to 90°C for a time from 40 to 50 minutes.

11. The method according to any of the preceding claims, wherein the amount in weight of dye and/or pigment with respect to the weight of transparent thermoplastic resin is from 1 · 10⁻⁴ to 1 · 10⁻² %, preferably 10 · 10⁻⁴ a 20 · 10⁻⁴ %, more preferably about 15 · 10⁻⁴ % in weight of dye or pigment with respect to the transparent thermoplastic resin.

12. A multilayer material comprising a layer of moulded pigmented thermoplastic or thermosetting resin having an internal side and an external side, the internal side being coated with at least one first internal layer comprising a resin selected from the group consisting of acrylics, polyesters, epoxides and mixtures thereof, pigmented with a black dye, and a second internal layer comprising a transparent non ceramic coating material, and the external side being coated with at least one first external layer comprising a colourless resin selected from the group consisting of acrylics, polyesters, epoxides and mixtures thereof, and a second external layer comprising a transparent ceramic material to resist scratches and abrasions.

13. The multilayer material according to claim 12, wherein, in a dry state,
- the first internal layer has a thickness from 18 to 27 µm, preferably from 20 to 25 µm, and the second internal layer has a thickness from 28 to 37 µm, preferably from 30 to 35 µm; and/or
- the first external layer has a thickness from 13 to 27 µm, preferably from 15 to 25 µm, and the second external layer has a thickness from 33 to 47 µm, preferably from 35 to 45 µm.

14. A trim panel comprising the material according to claim 12 or 13.
